# EUROPÄISCHE PATENTSCHRIFT

(11) **EP 4 114 697 B1**
(45) Veröffentlichungstag und Bekanntmachung des Hinweises auf die Patenterteilung: **29.11.2023**
(21) Anmeldenummer: 20830133.3
(22) Anmeldetag: 14.12.2020
(51) Int. Cl.: B60T 13/74

(54) **BREMSANLAGE MIT REDUNDANTER PARKBREMSFUNKTION**
BRAKE SYSTEM WITH REDUNDANT PARKING BRAKE FUNCTION
SYSTÈME DE FREIN AVEC FONCTION REDONDANTE DE FREINAGE DE STATIONNEMENT

(30) Priorität: 06.03.2020 DE 102020202920
(43) Veröffentlichungstag der Anmeldung: 11.01.2023
(73) Patentinhaber: Continental Automotive Technologies GmbH, 30165 Hannover (DE)
(72) Erfinder: BRENN, Martin, 60488 Frankfurt am Main (DE); BÜCHLER, Roman, 60488 Frankfurt am Main (DE); ULLRICH, Thorsten, 60488 Frankfurt am Main (DE)
(74) Vertreter: Continental Corporation
(86) Internationale Anmeldenummer: PCT/EP2020/086010
(87) Internationale Veröffentlichungsnummer: WO 2021/175477

(56) Entgegenhaltungen:
- EP-A1- 2 977 282
- DE-A1-102016 012 530
- DE-A1-102017 012 130
- DE-A1-102018 205 811
- DE-T5-112016 001 537

## Beschreibung

Die Erfindung betrifft eine Bremsanlage für ein Kraftfahrzeug aufweisend eine Mehrzahl von hydraulischen Bremseinheiten zur Bremsung jeweils eines Rades des Kraftfahrzeugs und einen ersten elektrischen Parkbremsaktuator zur Bremsung eines ersten Rades und einen zweiten elektrischen Parkbremsaktuator zur Bremsung eines zweiten Rades des Kraftfahrzeugs. Erstes und zweites Rad, die mit den Parkbremsaktuatoren versehen sind, können auch eine hydraulische Bremseinheit aufweisen, die dann entsprechend Teil der Mehrzahl von hydraulischen Bremseinheiten ist. Typischerweise sind die vier Räder eines Kraftfahrzeugs jeweils mit einer hydraulischen Betriebsbremseinheit ausgestattet und die Räder der Hinterachse zusätzlich mit einer elektromechanischen

Parkbremse. DE 10 2018 205811 A1 offenbart eine hydraulische Bremsanlage, ausgestattet mit zwei elektromechanischen Parkbremsen und zwei Steuergeräte, wobei jede Parkbremse von einem Steuergerät angesteuert wird.

Weiter weist eine solche Bremsanlage ein erstes Steuergerät auf, das eine erste Hydrauliksteuerung umfasst, welche dazu ausgebildet und eingerichtet ist die Mehrzahl der hydraulischen Bremseinheiten anzusteuern. Dazu kann die erste Hydrauliksteuerung insbesondere eine zugeordnete Ventileinrichtung und eine Druckaufbaueinrichtung ansteuern, welche einen Hydraulikdruck in den hydraulischen Bremseinheiten erhöht, um eine Bremskraft zu erzeugen.

Um ein Wegrollen sicher auszuschließen, weisen Fahrzeuge nach heutigem Stand der Technik neben der Parkbremse auch eine Getriebesperrklinke auf, welche das Fahrzeug dauerhaft im Stillstand halten kann. Bei Ausfall eines einzelnen Bauteils des Steuergeräts der Parkbremsaktuatoren, wie des Mikroprozessors, der Stromversorgung oder des Treibers, sind beide Parkbremssättel nicht mehr verfügbar. Jedoch wird das Fahrzeug durch die Getriebeklinke noch sicher im Stillstand gehalten. Die Kosten für eine solche Getriebeklinke sind jedoch außergewöhnlich hoch. Insbesondere im Zuge der Elektrifizierung der Fahrzeuge werden Getriebe auf die Anforderungen der verwendeten Elektromotoren angepasst, wobei durch einen Entfall der Getriebeklinke signifikante Kosten im gesamten Verbund gespart werden können.

Ein einfacher Entfall der Getriebeklinke birgt aus obigen Gründen ein hohes Risiko, da bei Ausfall der Parkbremssättel, das Fahrzeug unkontrolliert wegrollen könnte.

Es ist somit Aufgabe der vorliegenden Erfindung, eine Bremsanlage zu schaffen, welche ohne das Vorsehen einer Getriebeklinke das unkontrollierte Wegrollen des Fahrzeugs redundant und somit sicher verhindert.

Die Aufgabe wird gelöst durch eine Bremsanlage gemäß Anspruch 1 und ein Kraftfahrzeug nach Anspruch 15. Erfindungsgemäß umfasst das erste Steuergerät einen Treiber zur Ansteuerung des ersten Parkbremsaktuators und ein zweites Steuergerät mit einem Treiber zur Ansteuerung des ersten Parkbremsaktuators und einen Treiber zur Ansteuerung des zweiten Parkbremsaktuators. Die beiden Steuergeräte können dabei unabhängige Stromversorgungen aufweisen.

Durch eine solche Architektur ist eine Redundanz bezüglich der Parkbremsfunktionalität gegeben. Bei Ausfall des ersten Steuergeräts kann das zweite Steuergerät beide Parkbremsaktuatoren ansteuern, um ein Wegrollen des Kraftfahrzeugs selbst an steilen Hängen auszuschließen. Auch ergibt sich dadurch eine Redundanz für die Verzögerung eines fahrenden Fahrzeugs. Bei Ausfall des ersten Steuergeräts mit der Hydrauliksteuerung kann das Fahrzeug über das zweite Steuergerät mit den beiden angeschlossenen Parkbremsaktuatoren sicher über zwei Räder abgebremst werden. Bei Ausfall des zweiten Steuergeräts kann das erste Steuergerät den einen Parkbremsaktuator ansteuern der bei geringen Steigungen bereits ausreichend ist, um ein Wegrollen des Kraftfahrzeugs zu verhindern. Um auch an steilen Hängen ein Wegrollen zu verhindern, kann das erste Steuergerät zusätzlich die hydraulischen Bremseinheiten ansteuern, um eine zusätzliche Bremskraft zu erzeugen. Somit ist in beiden möglichen Fehlerfällen der Stillstand des Fahrzeugs sichergestellt, wodurch die Getriebeklinke entfallen kann.

In einer bevorzugten Ausführungsform der Erfindung umfasst das erste Steuergerät keinen Treiber zur Ansteuerung des zweiten Parkbremsaktuators. Das erste Steuergerät weist somit keine Möglichkeit zur Ansteuerung des zweiten Parkbremsaktuators auf. Durch das Einsparen dieser Ansteuerfunktion können Kosten der Bremsanlage reduziert und deren Komplexität minimiert werden.

In einer weiteren bevorzugten Ausführungsform der Erfindung weist das zweite Steuergerät einen im Vergleich zum ersten Steuergerät reduzierten Zugriff auf die Mehrzahl an hydraulischen Bremseinheiten auf. Unter Zugriff sind hierbei die Möglichkeiten zur Ansteuerung der hydraulischen Bremseinheiten zu verstehen. Auch durch die Minimierung der Zugriffsmöglichkeiten auf die hydraulischen Bremseinheiten können die Kosten der Bremsanlage reduziert und die Komplexität der Bremsanlage minimiert werden.

In einer besonders bevorzugten Ausführungsform der Erfindung weist das zweite Steuergerät gar keinen Zugriff auf die hydraulischen Bremseinheiten auf. Insbesondere weist das zweite Steuergerät kein Hydrauliksteuerung auf, welche einen Druckaufbau in den hydraulischen Bremseinheiten ermöglichen könnte. Diese Ausführungsform der Erfindung ist daher besonders kostengünstig zu fertigen.

In einer alternativen besonders bevorzugten Ausführungsform der Erfindung weist das zweite Steuergerät eine zweite Hydrauliksteuerung auf, die ausgebildet und eingerichtet ist, eine Anzahl der hydraulischen Bremseinheiten anzusteuern, welche geringer ist, als die Anzahl der hydraulischen Bremseinheiten, welche durch die erste Hydrauliksteuerung ansteuerbar sind. Insbesondere kann die Bremsanlage vier hydraulische Bremseinheiten umfassen, welche jeweils einem von vier Rädern des Kraftfahrzeugs zugeordnet sind. Während die erste Hydrauliksteuerung einen Druckaufbau in allen vier hydraulischen Bremseinheiten ermöglicht, ist die zweite Hydrauliksteuerung lediglich zum Ansteuern von zwei hydraulischen Bremseinheiten ausgebildet und eingerichtet. Sie kann dazu insbesondere eine eigene Druckaufbaueinrichtung und entsprechende Ventile ansteuern.

In einer besonders bevorzugten Ausführungsform der Erfindung ist die zweite Hydrauliksteuerung ausgebildet und eingerichtet, hydraulische Bremseinheiten einer Vorderachse des Kraftfahrzeugs anzusteuern und der erste und der zweite elektrische Parkbremsaktuator sind an einer Hinterachse des Kraftfahrzeugs angeordnet. Somit sind beide Steuergeräte, durch entsprechenden Zugriff auf die angeschlossenen Bremseinheiten und Aktoren, dazu in der Lage sowohl die Räder der Vorderachse als auch der Hinterachse des Kraftfahrzeuges zu bremsen.

In einer weiteren bevorzugten Ausführungsform der Erfindung ist bei Verfügbarkeit beider Steuergeräte nur das zweite Steuergerät für die Durchführung der Ansteuerung der Parkbremsaktuatoren verantwortlich und bei Ausfall oder Fehler des zweiten Steuergeräts wird eine Parkbremsanforderung durch das erste Steuergerät umgesetzt. Zum Austausch von Verfügbarkeitsinformationen können das erste Steuergerät und das zweite Steuergerät über eine Kommunikationsleitung verbunden sein. Als Kommunikationsleitung kommt eine separate Kommunikationsleitung oder ein Fahrzeugbus in Betracht.

In einer besonders bevorzugten Ausführungsform der Erfindung wird zur Umsetzung der Parkbremsanforderung durch das erste Steuergerät der erste Parkbremsaktuator und die hydraulische Bremseinheit angesteuert. Dazu wird der Parkbremsaktuator entsprechend festgezogen und Druck in der hydraulischen Bremseinheit aufgebaut. Somit addieren sich die Bremskräfte von hydraulischer Bremseinheit und Parkbremsaktuator, um ein sicheres Halten des Kraftfahrzeugs zu gewährleisten.

In einer besonders bevorzugten Ausführungsform der Erfindung wird eine Berechtigung zur Ansteuerung des ersten Parkbremsaktuators durch Austausch eines Tokens zwischen dem ersten Steuergerät und dem zweiten Steuergerät übergeben. Nur das Steuergerät, welches das Token besitzt, kann den Parkbremsaktuator ansteuern. Somit wird vermieden, dass durch gleichzeitiges, insbesondere widersprüchliches Ansteuern ein Fehler, insbesondere ein Kurzschluss entstehen könnte. Eine Übergabe des Tokens kann dann stattfinden sobald ein Fehler in dem zweiten Steuergerät, im Ansteuerpfad oder in einem der beiden Parkbremsaktuatoren festgestellt wird. Das Steuergerät mit dem Token steuert den ersten Parkbremsaktuator so an, als sei es das einzige Steuergerät im Verbund.

Insbesondere kann das erste und/oder das zweite Steuergerät dazu eingerichtet sein, nur dann den ersten Parkbremsaktuator anzusteuern, wenn das Steuergerät selbst das Token besitzt und das andere Steuergerät das Token nicht besitzt. Somit ist sichergestellt, dass immer nur eines der beiden Steuergeräte aktiv sein kann, während das andere Steuergerät keine Aktivität ausführen kann. Insbesondere mögliche Überschneidungen bei der Übergabe des Tokens werden somit vermieden, da der Zugriff erst erfolgen kann, sobald die Übergabe des Tokens vollständig abgeschlossen ist. Dies verhindert, dass beispielsweise bei einem Befehl zum Festziehen der Parkbremse (apply request) durch das erste Steuergerät und einem gleichzeitigen Befehl zum Loslassen (release request) durch das zweite Steuergerät ein Kurzschluss auftreten könnte.

Insbesondere erhält bei einem Einschaltvorgang, beispielsweise dem Hochfahren der Steuergeräte nach Einschalten der Zündung des Kraftfahrzeugs, das erste oder das zweite Steuergerät das Token, welches zur Ansteuerung des Parkbremsaktuators, der mit dem ersten und dem zweiten Steuergerät ansteuerbar verbunden ist, berechtigt. Das andere Steuergerät erhält entsprechend kein Token. Somit ist von Beginn an klar definiert, welches der Steuergeräte auf die Parkbremsaktuatoren zugreifen darf.

In einer besonders bevorzugten Ausführungsform der Erfindung ist zwischen dem ersten Parkbremsaktuator und den Treibern zur Ansteuerung des ersten Parkbremsaktuators des ersten Steuergeräts und des zweiten Steuergeräts jeweils ein Schutzschalter angeordnet. Durch die Schutzschalter können die Steuergeräte von dem ersten Parkbremsaktuator getrennt werden, um ein Übersprechen von Fehlern zwischen den beiden Parkbremsaktuatoren zu vermeiden, als auch um ein Übersprechen von Spannungsdifferenzen zu vermeiden. Somit wird außerdem verhindert, dass ein Fehler am Parkbremsaktuator das Steuergerät beschädigt.

In einer besonders bevorzugten Ausführungsform der Erfindung ist immer nur der Schutzschalter geschlossen, dessen zugeordnetes Steuergerät das Token besitzt. Somit wird das andere Steuergerät, welches aus Redundanzgründen vorgehalten wird, vor möglichen Störeinflüssen geschützt, sodass dieses Steuergerät im Fehlerfall einsatzbereit ist.

In einer weiteren bevorzugten Ausführungsform der Erfindung ist das zweite Steuergerät dazu eingerichtet, bei Ausfall oder Fehler des ersten Steuergeräts und/oder zumindest einer der hydraulischen Bremseinheiten eine Betriebsbremsfunktion zur Verzögerung des Kraftfahrzeugs durch die Parkbremsaktuatoren umzusetzen oder zu ergänzen und somit eine Rückfallebene für die Betriebsbremse zu bilden. Die Verzögerung mittels der beiden Parkbremsaktuatoren kann dabei initiiert werden, wenn ein Bremspedal oder ein Parkbremsschalter gedrückt wird oder eine automatische Verzögerung, beispielsweise durch einen internen Drucksensor der Hydraulik, ausgelöst wird. Durch die erfindungsgemäße Architektur ist es damit nicht nur möglich Redundanz in den Parkbremsfunktionen zu gewährleisten, sondern auch eine Redundanz in der Betriebsbremse. Können die hydraulische Bremseinheiten nicht mehr vollständig angesteuert werden, um ein Verzögern des Kraftfahrzeuges sicherzustellen, werden somit die Parkbremsaktuatoren genutzt um ein Bremsmoment zu erzeugen.

In einer weiteren bevorzugten Ausführungsform der Erfindung umfasst die Bremsanlage weiter vier Raddrehzahlsensoren, welche derart mit dem zweiten Steuergerät verbunden sind, dass die Signale der vier Raddrehzahlsensoren an das zweite Steuergerät übermittelbar sind, wobei außerdem ein Multiplexer vorgesehen ist, der dazu eingerichtet ist, die Signale von zwei Raddrehzahlsensoren auf das erste Steuergerät umzuschalten. Der Multiplexer kann auf dem ersten oder dem zweiten Steuergerät angeordnet sein und ist so geschaltet, dass bei Fehlerszenario oder stromlosem Betrieb zwei der vier Raddrehzahlsensoren elektrisch mit dem anderen Steuergerät verbunden sind. Im Normalbetrieb können somit alle vier Raddrehzahlsensoren direkt an dem zweiten Steuergerät angeschlossen sein, auf dem beispielsweise die Fahrstabilitätsfunktionen implementiert sind. Im Falle des Ausfalls dieses Steuergeräts benötigt das verbleibende Steuergerät eine sichere Information, ob das Fahrzeug steht. Ein Anspannen der Parkbremsaktuatoren während der Fahrt ist im Allgemeinen aus Gründen der Fahrstabilität zu verhindern. Da der Betriebsmodus der Rückfallebene, bei dem die Parkbremsaktuatoren durch das erste Steuergerät angesteuert werden, ausreichend selten auftritt, ist hier die Nutzung von zwei statt vier Raddrehzahlsensoren ausreichend.

In einer weiteren bevorzugten Ausführungsform der Erfindung ist das zweite Steuergerät dazu eingerichtet unter Einbeziehung der Signale der vier Raddrehzahlsensoren eine schlupfgeregelte Bremsung mittels der beiden Parkbremsaktuatoren durchzuführen. Somit kann auch in der Rückfallebene der Betriebsbremse, beim Durchführen eine Betriebsbremsfunktion durch die Parkbremsaktuatoren, eine schlupfgeregelte Bremsung durchgeführt werden.

Die Erfindung wird außerdem gelöst durch ein Kraftfahrzeug aufweisend eine Vorderachse und eine Hinterachse und eine vorstehend beschriebenen Bremsanlage.

Weitere Merkmale, Vorteile und Anwendungsmöglichen der Erfindung ergeben sich auch durch die nachfolgende Beschreibung von Ausführungsbeispielen und der Zeichnungen. Dabei gehören alle beschriebenen und/oder bildlich dargestellten Merkmale sowohl einzeln als auch in beliebiger Kombination zum Gegenstad der Erfindung, auch unabhängig von ihrer Zusammenfassung in den Ansprüchen oder deren Rückbezügen.
Figur 1 zeigt eine schematische Darstellung einer ersten Ausführungsform der erfindungsgemäßen Bremsanlage,
Figur 2 zeigt eine schematische Darstellung einer zweiten Ausführungsform der erfindungsgemäßen Bremsanlage,
Figur 3 zeigt ein erfindungsgemäßes Kraftfahrzeug mit einer Bremsanlage nach Fig.2,
Figur 4 zeigt die Verteilung der Raddrehzahlsensorsignale einer Ausführungsform der Erfindung,
Figur 5 zeigt die Verteilung der Raddrehzahlsensorsignale einer weiteren Ausführungsform der Erfindung;

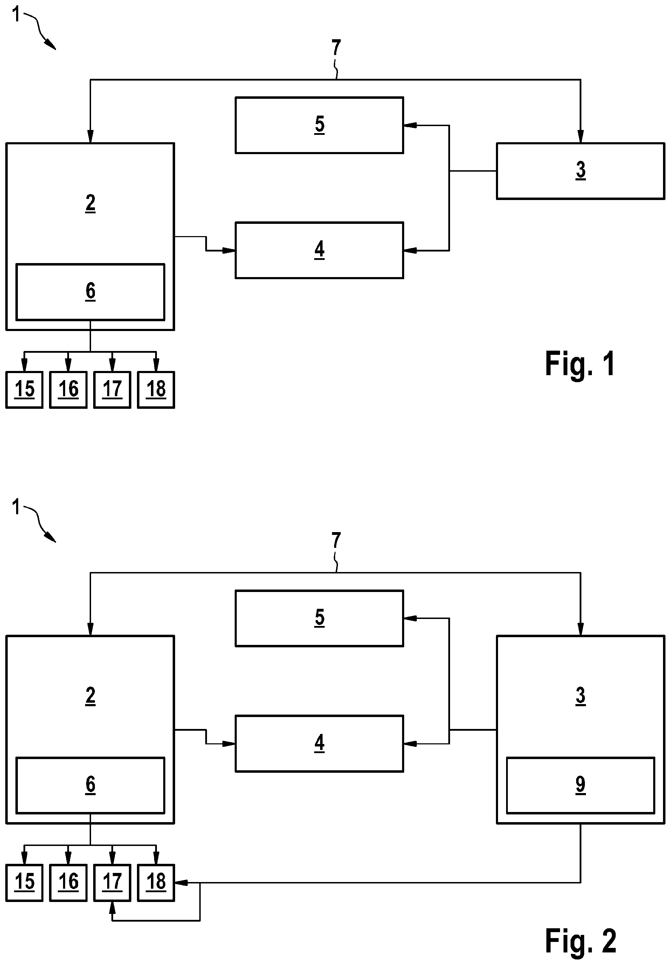

Die in Figur 1 dargestellte Ausführungsform der Erfindung weist ein erstes Steuergerät 2 auf, welches als Hauptsteuergerät (Main ECU) ausgeführt ist, und eine Hydrauliksteuerung 6 zur Ansteuerung von hydraulischen Bremseinheiten 15, 16, 17, 18 aufweist. Die Hydrauliksteuerung 6 bildet zusammen mit den hydraulischen Bremseinheiten 15, 16, 17, 18 die Betriebsbremse eines Kraftfahrzeugs 10, welche bei Aktuierung eines Bremspedals das Kraftfahrzeug 10 verzögert. Das erste Steuergerät 2 kann über die Hydrauliksteuerung 6 insbesondere einen Druckaufbau in den hydraulischen Bremseinheiten 15, 16, 17, initiieren. Das erste Steuergerät 2 ist darüber hinaus zur Ansteuerung einer ersten elektronischen Parkbremse (EPB) mit einem entsprechenden Parkbremsaktuator 4 eingerichtet und mit diesem verbunden. Das erste Steuergerät 2 weist keine direkte Verbindung zu der zweiten elektronischen Parkbremse mit dem zweiten Parkbremsaktuator 5 auf, um diese anzusteuern.

Das zweite Steuergerät 3 ist hingegen mit beiden elektronischen Parkbremsen mit den zugehörigen Parkbremsaktuatoren 4, 5 verbunden und dazu eingerichtet die beiden Parkbremsaktuatoren 4, 5 anzusteuern. Das zweite Steuergerät 3 weist keine eigene Hydrauliksteuerung auf, welche eine Ansteuerung von hydraulischen Bremseinheiten 15, 16, 17, 18 ermöglichen würde. Auch weist das zweite Steuergerät 3 keine Verbindung zu der Hydrauliksteuerung 6 des ersten Steuergeräts auf, die einen Zugriff auf die hydraulischen Bremseinheiten 15, 16, 17, 18 ermöglichen würde.

Eine Kommunikationsleitung 7 verbindet das erste Steuergerät 2 mit dem zweiten Steuergerät 3, um eine sichere Kommunikation zwischen den beiden Steuergeräten 2, 3 zu garantieren. Die Kommunikationsleitung 7 ist als separate Kommunikationsleitung 7 ausgebildet.

Die Alternative Ausführungsform wie sie in Figur 2 dargestellt ist, weist ebenfalls ein erstes Steuergerät 2 auf, welches äquivalent zu Fig. 1 aufgebaut und verschaltet ist. Das zweite Steuergerät 3 der Figur 2 weist jedoch ebenfalls eine Hydrauliksteuerung 9 auf, welche zur Ansteuerung der hydraulischen Bremseinheiten 17, 18 eingerichtet ist. Das zweite Steuergerät 3 weist somit im Vergleich zum erste Steuergerät 2 einen reduzierten Zugriff auf die Mehrzahl von hydraulischen Bremseinheiten 15, 16, 17, 18 auf.

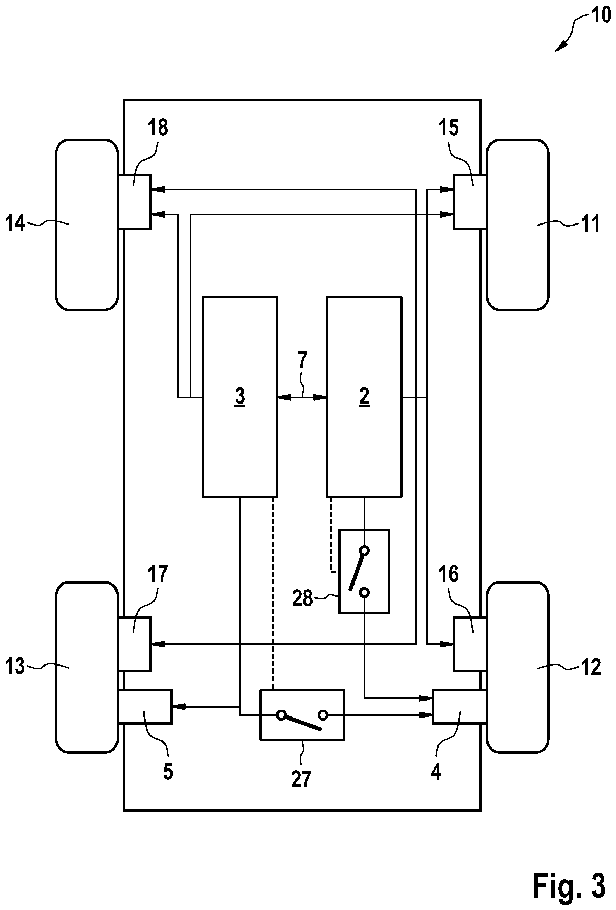

Figur 3 zeigt ein erfindungsgemäßes Kraftfahrzeug 10 mit einer Vorderachse mit einem rechten Vorderrad 11, welches durch eine hydraulische Bremseinheit 15 gebremst werden kann und einem linken Vorderrad 14, welches durch eine hydraulische Bremseinheit 18 gebremst werden kann. An einer Hinterachse des Fahrzeugs 10 ist ein rechtes Hinterrad 12 angeordnet, welches durch eine hydraulische Bremseinheit 16 gebremst werden kann und an einem linken Hinterrad 13 der Hinterachse ist eine hydraulische Bremseinheit 17 angeordnet, um dieses Rad zu bremsen. Darüber hinaus ist am linken Hinterrad 13 ein Parkbremsaktuator 5 und am rechten Hinterrad 12 ein Parkbremsaktuator 4 angeordnet, mit denen die beiden Hinterräder 12, 13 und damit das Fahrzeug 10 im Stillstand gehalten werden kann.

Figur 3 zeigt darüber hinaus das erste Steuergerät 2 und das zweite Steuergerät 3, welche über eine Kommunikationsleitung 7 miteinander verbunden sind. Das erste Steuergerät 2 ist dazu eingerichtet Bremsdrücke in den hydraulischen Bremseinheiten 15, 16, 17, 18 aufzubauen und weist entsprechende, in der Fig. 3 vereinfacht funktional dargestellte, Verbindungen an die jeweiligen hydraulischen Bremseinheiten 15, 16, 17, 18 auf. Dies können hydraulische Verbindungen sein, die mit entsprechenden Ventileinrichtungen versehen, mit einer Druckaufbaueinrichtung, wie etwa einer Hydraulikpumpe oder einem

Linearaktuator, verbunden sind. Ventileinrichtungen und Druckaufbaueinrichtung können durch das Steuergerät angesteuert werden.

Das zweite Steuergerät 3 ist dazu eingerichtet, Bremsdrücke in den hydraulischen Bremseinheiten 15 und 18 an den beiden Rädern 11, 14 der Vorderachse aufzubauen und weist entsprechend, ebenfalls nur vereinfacht funktional dargestellte Verbindungen auf.

Das erste Steuergerät 2 weist außerdem eine Verbindung mit dem ersten Parkbremsaktuator 4 am rechten Hinterrad 12 auf, um diesen Parkbremsaktuator 4 anzusteuern. Die Verbindung zwischen Steuergerät 2 und Parkbremsaktuator 5 ist durch einen Schutzschalter 28 getrennt, welcher durch das erste Steuergerät 2 geschaltet werden kann.

Das zweite Steuergerät 3 ist ebenfalls mit dem ersten Parkbremsaktuator 4 über einen Schutzschalter 27 verbunden, der vom zweiten Steuergerät 3 geschaltet werden kann. Das zweite Steuergerät 3 ist außerdem mit dem zweiten Parkbremsaktuator 5 verbunden. Da der zweite Parkbremsaktuator 5 lediglich mit dem zweiten Steuergerät 3 verbunden ist, ist kein Schutzschalter nötig.

Die Schutzschalter 27, 28 können auch Teil des ersten beziehungsweise des zweiten Steuergeräts 2, 3 sein und beide Adern der jeweiligen Aktuatorverbindung öffnen und schließen.

Im fehlerfreien Betrieb, wenn beide Steuergeräte 2, 3 voll verfügbar sind, wird eine Betriebsbremsfunktion durch das erste Steuergerät 2 zur Verfügung gestellt. Bei einer Bremsanforderung, beispielsweise durch Drücken eines Bremspedals oder durch eine automatische Funktion, wie etwa eine Adaptive Cruise Control (ACC) oder eine Notbremsfunktion, wird in den vier hydraulischen Bremseinheiten 15, 16, 17, 18 durch das erste Steuergerät 2 ein entsprechender Bremsdruck aufgebaut. Die Ansteuerung der hydraulischen Bremseinheiten 15 und 18 durch das zweite Steuergerät 3 wird in diesem Fall nicht genutzt.

Nach dem Abstellen des Fahrzeugs 10 kann eine Parkbremsanforderung, beispielsweise durch Drücken eines entsprechenden Parkbremsschalters oder durch eine automatische Bedingung, gesetzt werden. Das zweite Steuergerät 3 steuert dann den Parkbremsaktuator 4 und den Parkbremsaktuator 5 derart an, dass diese die Parkbremse festziehen, um eine Bremskraft in den Hinterrädern 12, 13 zu erzeugen. Der Schutzschalter 27 ist dabei durch Ansteuerung durch das zweite Steuergerät 3 geschlossen und verbindet somit den Parkbremsaktuator 4 mit dem zweiten Steuergerät 3. Die Ansteuerung des ersten Parkbremsaktuators 4 durch das erste Steuergerät 2 wird hingegen nicht genutzt und der Schutzschalter 28 ist durch Ansteuerung durch das erste Steuergerät 2 geöffnet und stellt somit keine Verbindung zu dem Parkbremsaktuator 4 her. Damit wird außerdem verhindert, dass der Schaltausgang des zweiten Steuergeräts 3 mit dem Schaltausgang des ersten Steuergeräts 2 über die Verbindung am Parkbremsaktuator 4 verbunden würde.

Im Falle eines Fehlers, beispielsweise bei Ausfall des ersten Steuergeräts 2, wird die Nichtverfügbarkeit des ersten Steuergeräts 2 über die Kommunikationsleitung 7 an das zweite Steuergerät 3 übermittelt. Das zweite Steuergerät 3 bildet somit die Rückfallebene der Betriebsbremse. Bei einer Bremsanforderung zur Verzögerung des Fahrzeugs 10 kann das zweite Steuergerät 3 die hydraulischen Bremseinheiten 15, 18 der Vorderachse ansteuern. Zur Bremsung der Hinterachse nutzt das zweite Steuergerät 3 die elektromechanischen Parkbremsaktuatoren 4, 5. Somit können auch in der Rückfallebene der Betriebsbremse alle 4 Räder 11, 12, 13, 14 des Fahrzeugs 10 gebremst werden, um eine sichere Verzögerung des Fahrzeugs 10 zu gewährleisten.

Bei Ausfall des zweiten Steuergeräts 3, wird die Nichtverfügbarkeit des zweiten Steuergeräts 3 ebenfalls über die Kommunikationsleitung 7 an das erste Steuergerät 2 kommuniziert. Darüber hinaus wird ein Token zur Berechtigung der Ansteuerung des ersten Parkbremsaktuators 4 übergeben. Durch den Ausfall des zweiten Steuergeräts 3 kann dieses Steuergerät im Extremfall kein Signal zum Öffnen des Schutzschalters 27 mehr geben. Der Schutzschalter 27 ist jedoch so geschaltet, dass dieser stromlos öffnet und daher durch den Ausfall des zweiten Steuergeräts 3 automatisch geöffnet wird. Das erste Steuergerät 2 empfängt das Token zur Berechtigung zur Ansteuerung des ersten Parkbremsaktuators 4 und schließt den Schutzschalter 28 zwischen dem ersten Steuergerät 2 und dem ersten Parkbremsaktuator 4 und stellt somit eine Verbindung her. Bei einer Parkbremsanforderung wird nun durch das erste Steuergerät 2 der erste Parkbremsaktuator 4 angesteuert und darüber hinaus in den hydraulischen Bremseinheiten 15, 16, 17, 18 ein Bremsdruck erzeugt, um die Nichtansteuerung des zweiten Parkbremsaktuators 5 zu kompensieren und somit eine genügend hohe Haltekraft zu erzeugen. Alternativ kann das erste Steuergerät 2 lediglich die hydraulische Bremseinheit 17 ansteuern, welche am linken Hinterrad 13 angeordnet ist. Somit steuert das erste Steuergerät 2 lediglich die hydraulische Bremseinheit 17 an, die dem gleichen Rad 13 zugeordnet ist, wie der elektrische Parkbremsaktuator 5, der nicht durch das erste Steuergerät 2 angesteuert werden kann.

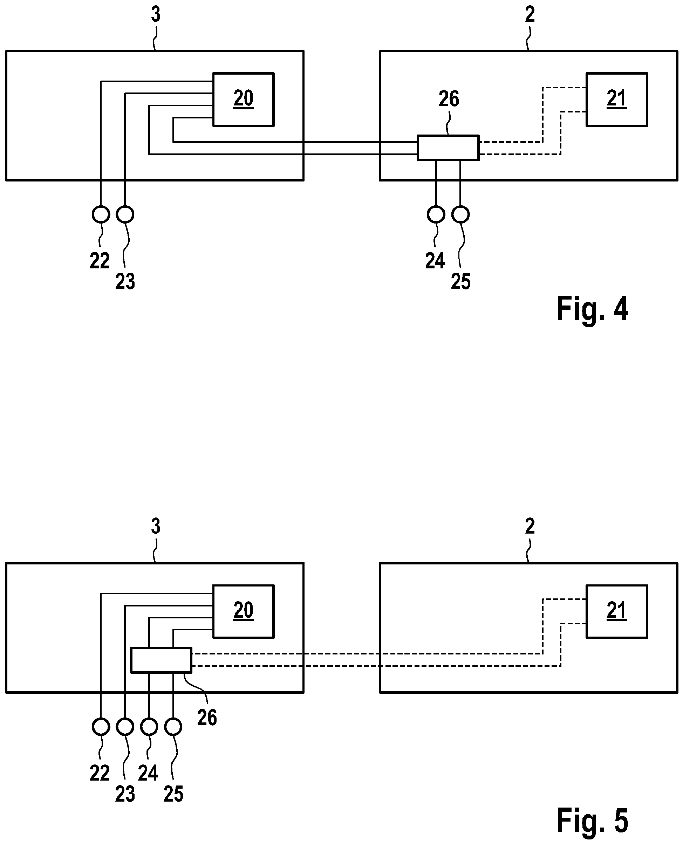

Zur Umsetzung von Fahrstabilitätsfunktionen und schlupfgeregeltem Bremsen sind Raddrehzahlsignale 22, 23, 24, 25 nötig, welche Informationen über die Drehgeschwindigkeit der Räder 11, 12, 13, 14 liefern. In der Ausführungsform der Figur 4 ist auf dem ersten Steuergerät 2 ein Multiplexer 26 angeordnet. Dieser erhält das Signal des Raddrehzahlsensors 24 des rechten Vorderrades 11 und das Signal des Raddrehzahlsensors 25 des linken Hinterrads 13. im fehlerfreien Zustand gibt der Multiplexer 26 die Signale der Raddrehzahlsensoren 24, 25 an das zweite Steuergerät 3 und an eine dort angesiedelte Funktionseinheit 20 zur Umsetzung von Fahrstabilitätsfunktionen weiter. Die Signale des Raddrehzahlsensors 22 des linken Vorderrades 14 und die Signale des Raddrehzahlsensors 23 des rechten Hinterrades 12 werden an das zweite Steuergerät 3 und direkt an die Funktionseinheit 20 zur Umsetzung von Fahrstabilitätsfunktionen verbunden. Der Multiplexer 26 ist derart geschaltet, dass dieser auch bei Ausfall des ersten Steuergeräts 2 die Signale der Raddrehzahlsensoren 24, 25 an das zweite Steuergerät 3 weiterleitet. Bei Ausfall des zweiten Steuergeräts 3 schaltet der multiplexer 26 um und übermittelt die Signale der Raddrehzahlsensoren 24, 25 an eine Funktionseinheit mit der Rückfallebene der Fahrstabilitätsfunktion.

Figur 5 zeigt eine alternative Ausführungsform, bei der die Signale der Raddrehzahlsensoren 22, 23, 24, 25 sämtlich an das zweite Steuergerät 3 übermittelt werden. Die Raddrehzahlsensoren 22, 23 sind dabei direkt mit der Funktionseinheit 20 zur Umsetzung der Fahrstabilitätsfunktion verbunden. Die Raddrehzahl Sensoren 24, 25 sind hingegen über einen Multiplexer 26, der in dieser Ausführungsform auf dem zweiten Steuergerät angeordnet ist, mit der Funktionseinheit 20 verbunden. Bei Ausfall des zweiten Steuergeräts schaltet der Multiplexer 26 die Signale der Raddrehzahlsensoren 24, 25 um und kommuniziert diese an das erste Steuergerät 2 an eine Funktionseinheit 21 zur Umsetzung der Rückfallebene der Stabilitätsfunktionen.

Die erfindungsgemäße Bremsanlage bietet somit Rückfallebenen sowohl für die Betriebsbremse als auch für die Parkbremsfunktionen, um in allen Fällen ein sicheres Abbremsen des Fahrzeugs und Verbleiben im Stillstand zu gewährleisten.

### Bezugszeichenliste:

- 1: Bremsanlage
- 2: Erstes Steuergerät
- 3: Zweites Steuergerät
- 4: Erster Parkbremsaktuator
- 5: Zweiter Parkbremsaktuator
- 6: erste Hydrauliksteuerung
- 7: Kommunikationsleitung
- 9: zweite Hydrauliksteuerung
- 10: Kraftfahrzeug
- 11: rechtes Vorderrad
- 12: rechtes Hinterrad
- 13: linkes Hinterrad
- 14: linkes Vorderrad
- 15: hydraulische Bremseinheit vorne rechts
- 16: hydraulische Bremseinheit hinten rechts
- 17: hydraulische Bremseinheit hinten links
- 18: hydraulische Bremseinheit vorne links
- 20: Funktionseinheit Stabilität
- 21: Funktionseinheit Rückfallebene Stabilität
- 22: Raddrehzahlsensor vorne links
- 23: Raddrehzahlsensor hinten rechts
- 24: Raddrehzahlsensor vorne rechts
- 25: Raddrehzahlsensor hinten links
- 26: Multiplexer
- 27: Schutzschalter zweites Steuergerät
- 28: Schutzschalter erstes Steuergerät

## Patentansprüche

1. Bremsanlage für ein Kraftfahrzeug (10) aufweisend eine Mehrzahl von hydraulischen Bremseinheiten (15, 16, 17, 18) zur Bremsung jeweils eines Rades (11, 12, 13, 14) des Kraftfahrzeugs (10) und
- einen ersten elektrischen Parkbremsaktuator (4) zur Bremsung eines ersten Rades (12) und
- einen zweiten elektrischen Parkbremsaktuator (5) zur Bremsung eines zweiten Rades (13)
- ein erstes Steuergerät (2) das eine erste Hydrauliksteuerung (6) umfasst, welche dazu ausgebildet und eingerichtet ist die Mehrzahl der hydraulischen Bremseinheiten (15, 16, 17, 18) anzusteuern, wobei
- das erste Steuergerät (2) einen Treiber zur Ansteuerung des ersten Parkbremsaktuators (4) umfasst und **dadurch gekennzeichnet, dass**
- ein zweites Steuergerät (3) vorgesehen ist, das einen Treiber zur Ansteuerung des ersten Parkbremsaktuators (4) und einen Treiber zur Ansteuerung des zweiten Parkbremsaktuators (5) umfasst.

2. Bremsanlage nach Anspruch 1, **dadurch gekennzeichnet, dass** das erste Steuergerät (2) keinen Treiber zur Ansteuerung des zweiten Parkbremsaktuators (5) umfasst.

3. Bremsanlage nach Anspruch 1 oder 2, **dadurch gekennzeichnet, dass** das zweite Steuergerät (3) einen im Vergleich zum ersten Steuergerät (2) reduzierten Zugriff auf die Mehrzahl von hydraulischen Bremseinheiten (15, 16, 17, 18) aufweist.

4. Bremsanlage nach Anspruch 3, **dadurch gekennzeichnet, dass** das zweite Steuergerät (3) keinen Zugriff auf die hydraulischen Bremseinheiten (15, 16, 17, 18) aufweist.

5. Bremsanlage nach Anspruch 3, **dadurch gekennzeichnet, dass** das zweite Steuergerät (3) eine zweite Hydrauliksteuerung (9) umfasst, die ausgebildet und eingerichtet ist, eine Anzahl der hydraulischen Bremseinheiten (17, 18) anzusteuern, welche geringer ist, als die Anzahl der hydraulischen Bremseinheiten (15, 16, 17, 18), welche durch die erste Hydrauliksteuerung (6) ansteuerbar sind.

6. Bremsanlage nach Anspruch 5, **dadurch gekennzeichnet, dass** die zweite Hydrauliksteuerung (9) ausgebildet und eingerichtet ist, hydraulische Bremseinheiten (15, 16) einer Vorderachse des Kraftfahrzeugs (10) anzusteuern und der erste und der zweite elektrische Parkbremsaktuator (4, 5) an einer Hinterachse des Kraftfahrzeugs (10) angeordnet sind.

7. Bremsanlage nach einem der vorhergehenden Ansprüche, **dadurch gekennzeichnet, dass** bei Verfügbarkeit des ersten und des zweiten Steuergeräts (2, 3) bei einer Parkbremsanforderung nur das zweite Steuergerät (3) die Ansteuerung der Parkbremsaktuatoren (4, 5) durchführt und bei Ausfall oder Fehler des zweiten Steuergeräts (3) eine Parkbremsanforderung durch das erste Steuergerät (2) umgesetzt wird.

8. Bremsanlage nach Anspruch 7, **dadurch gekennzeichnet, dass** zur Umsetzung der Parkbremsanforderung der erste Parkbremsaktuator (4) und zumindest eine hydraulische Bremseinheit (15, 16, 17, 18) angesteuert wird.

9. Bremsanlage nach einem der vorhergehenden Ansprüche, **dadurch gekennzeichnet, dass** eine Berechtigung zur Ansteuerung des ersten Parkbremsaktuators (4) durch Austausch eines Tokens zwischen dem ersten Steuergerät (2) und dem zweiten Steuergerät (3) übergeben wird.

10. Bremsanlage nach einem der vorhergehenden Ansprüche, **dadurch gekennzeichnet, dass** zwischen dem ersten Parkbremsaktuator (4) und den Treibern zur Ansteuerung des ersten Parkbremsaktuators (4) des ersten Steuergeräts (2) und des zweiten Steuergeräts (3) jeweils ein Schutzschalter (27, 28) angeordnet ist.

11. Bremsanlage nach Anspruch 10, **dadurch gekennzeichnet, dass** immer nur der Schutzschalter (27, 28) geschlossen ist, dessen zugeordnetes Steuergerät (2, 3) das Token besitzt.

12. Bremsanlage nach einem der vorhergehenden Ansprüche, **dadurch gekennzeichnet, dass** das zweite Steuergerät (3) dazu eingerichtet ist, bei Ausfall oder Fehler des ersten Steuergeräts (2) und/oder zumindest einer der hydraulischen Bremseinheiten (15, 16, 17, 18) eine Betriebsbremsfunktion zur Verzögerung des fahrenden Kraftfahrzeugs (10) durch die Parkbremsaktuatoren (4, 5) umzusetzen oder zu ergänzen.

13. Bremsanlage nach einem der vorhergehenden Ansprüche, umfassend vier Raddrehzahlsensoren **dadurch gekennzeichnet, dass** die vier Raddrehzahlsensoren (22, 23, 24, 25) derart mit dem zweiten Steuergerät (3) verbunden sind, dass die Signale der vier Raddrehzahlsensoren (22, 23, 24, 25) an das zweite Steuergerät (3) übermittelbar sind, wobei weiter ein Multiplexer (26) vorgesehen ist, der dazu eingerichtet ist, die Signale von zwei Raddrehzahlsensoren (22, 23, 24, 25) auf das erste Steuergerät (2) umzuschalten.

14. Bremsanlage nach Anspruch 13, **dadurch gekennzeichnet, dass** das zweite Steuergerät (3) dazu eingerichtet ist, unter Einbeziehung der Signale der vier Raddrehzahlsensoren (22, 23, 24, 25), eine schlupfgeregelte Bremsung mittels der beiden Parkbremsaktuatoren (4, 5) durchzuführen.

15. Kraftfahrzeug aufweisend eine Vorderachse und eine Hinterachse, **dadurch gekennzeichnet, dass** eine Bremsanlage (1) gemäß einem der Ansprüche 1 bis 14 vorgesehen ist.

## Claims

1. Braking system for a motor vehicle (10) having a plurality of hydraulic brake units (15, 16, 17, 18) for braking in each case one wheel (11, 12, 13, 14) of the motor vehicle (10) and
- a first electric parking brake actuator (4) for braking a first wheel (12) and
- a second electric parking brake actuator (5) for braking a second wheel (13)
- a first control device (2) which comprises a first hydraulic controller (6) which is designed and set up to drive the plurality of hydraulic brake units (15, 16, 17, 18), wherein
- the first control device (2) comprises a driver for driving the first parking brake actuator (4) and **characterized in that**
- a second control device (3) is provided, which comprises a driver for driving the first parking brake actuator (4) and a driver for driving the second parking brake actuator (5).

2. Braking system according to Claim 1, **characterized in that** the first control device (2) does not comprise a driver for driving the second parking brake actuator (5).

3. Braking system according to Claim 1 or 2, **characterized in that** the second control device (3) has reduced access to the plurality of hydraulic brake units (15, 16, 17, 18) compared to the first control device (2).

4. Braking system according to Claim 3, **characterized in that** the second control device (3) has no access to the hydraulic brake units (15, 16, 17, 18).

5. Braking system according to Claim 3, **characterized in that** the second control device (3) comprises a second hydraulic controller (9) which is designed and set up to drive a number of hydraulic brake units (17, 18) which is less than the number of hydraulic brake units (15, 16, 17, 18) that can be driven by the first hydraulic controller (6).

6. Braking system according to Claim 5, **characterized in that** the second hydraulic controller (9) is designed and set up to drive hydraulic brake units (15, 16) of a front axle of the motor vehicle (10), and the first and the second electric parking brake actuator (4, 5) are arranged on a rear axle of the motor vehicle (10).

7. Braking system according to one of the preceding claims, **characterized in that,** when the first and the second control devices (2, 3) are available, only the second control device (3) drives the parking brake actuators (4, 5) when a parking brake request is made, and a parking brake request is implemented by the first control device (2) if the second control device (3) fails or has a fault.

8. Braking system according to Claim 7, **characterized in that** the first parking brake actuator (4) and at least one hydraulic brake unit (15, 16, 17, 18) are driven for the purpose of implementing the parking brake request.

9. Braking system according to one of the preceding claims, **characterized in that** authorization to drive the first parking brake actuator (4) is transferred by a token being exchanged between the first control device (2) and the second control device (3).

10. Braking system according to one of the preceding claims, **characterized in that** a circuit breaker (27, 28) is arranged in each case between the first parking brake actuator (4) and the drivers for driving the first parking brake actuator (4) of the first control device (2) and the second control device (3).

11. Braking system according to Claim 10, **characterized in that** only the circuit breaker (27, 28) whose associated control device (2, 3) has the token is ever closed.

12. Braking system according to one of the preceding claims, **characterized in that** the second control device (3) is set up to implement or to supplement a service brake function for decelerating the moving motor vehicle (10) using the parking brake actuators (4, 5) if the first control device (2) and/or at least one of the hydraulic brake units (15, 16, 17, 18) fail/fails or have/has a fault.

13. Braking system according to one of the preceding claims, comprising four wheel speed sensors, **characterized in that** the four wheel speed sensors (22, 23, 24, 25) are connected to the second control device (3) in such a way that the signals from the four wheel speed sensors (22, 23, 24, 25) can be transmitted to the second control device (3), wherein furthermore a multiplexer (26) is provided, which is set up to switch over the signals from two wheel speed sensors (22, 23, 24, 25) to the first control device (2).

14. Braking system according to Claim 13, **characterized in that** the second control device (3) is set up to carry out slip-controlled braking by means of the two parking brake actuators (4, 5) taking into account the signals from the four wheel speed sensors (22, 23, 24, 25).

15. Motor vehicle having a front axle and a rear axle, **characterized in that** a braking system (1) according to one of Claims 1 to 14 is provided.

## Revendications

1. Système de freinage pour un véhicule automobile (10) présentant une pluralité d'unités de frein hydrauliques (15, 16, 17, 18) destinées chacune à freiner une roue (11, 12, 13, 14) du véhicule automobile (10) et
- un premier actionneur électrique de frein de stationnement (4) pour le freinage d'une première roue (12) et
- un deuxième actionneur électrique de frein de stationnement (5) pour le freinage une deuxième roue (13),
- un premier dispositif de commande (2) qui comprend un premier moyen de commande hydraulique (6) qui est conçu et agencé pour commander la pluralité d'unités de frein hydrauliques (15, 16, 17, 18), dans lequel
- le premier dispositif de commande (2) comprend un dispositif d'entraînement pour commander le premier actionneur de frein de stationnement (4), et **caractérisé en ce que**
- un deuxième dispositif de commande (3) est prévu, qui comprend un dispositif d'entraînement pour la commande du premier actionneur de frein de stationnement (4) et un dispositif d'entraînement pour la commande du deuxième actionneur de frein de stationnement (5).

2. Système de freinage selon la revendication 1, **caractérisé en ce que** le premier dispositif de commande (2) ne comprend pas de dispositif d'entraînement pour la commande du deuxième actionneur de frein de stationnement (5).

3. Système de freinage selon la revendication 1 ou la revendication 2, **caractérisé en ce que** le deuxième dispositif de commande (3) a un accès réduit à la pluralité d'unités de frein hydrauliques (15, 16, 17, 18) par rapport au premier dispositif de commande (2).

4. Système de freinage selon la revendication 3, **caractérisé en ce que** le deuxième dispositif de commande (3) n'a aucun accès aux unités de frein hydrauliques (15, 16, 17, 18).

5. Système de freinage selon la revendication 3, **caractérisé en ce que** le deuxième dispositif de commande (3) comprend un deuxième moyen de commande hydraulique (9) qui est configuré et agencé pour commander un nombre d'unités de frein hydrauliques (17, 18) qui est inférieur au nombre d'unités de frein hydrauliques (15, 16, 17, 18) qui sont aptes à être commandées par le premier moyen de commande hydraulique (6).

6. Système de freinage selon la revendication 5, **caractérisé en ce que** le deuxième moyen de commande hydraulique (9) est conçu et agencé pour commander des unités de frein hydrauliques (15, 16) d'un essieu avant du véhicule automobile (10) et **en ce que** le premier et le deuxième actionneurs électriques de frein de stationnement (4, 5) sont disposés sur un essieu arrière du véhicule automobile (10).

7. Système de freinage selon l'une des revendications précédentes, **caractérisé en ce que**, lorsque le premier et le deuxième dispositif de commande (2, 3) sont disponibles, seul le deuxième dispositif de commande (3) effectue la commande des actionneurs de frein de stationnement (4, 5) lors d'une demande de frein de stationnement et, en cas de panne ou de défaillance du deuxième dispositif de commande (3), une demande de frein de stationnement est mise en oeuvre par le premier dispositif de commande (2).

8. Système de freinage selon la revendication 7, **caractérisé en ce que** le premier actionneur de frein de stationnement (4) et au moins une unité de frein hydraulique (15, 16, 17, 18) sont commandés pour la mise en oeuvre de la demande de frein de stationnement.

9. Système de freinage selon l'une des revendications précédentes, **caractérisé en ce qu'**une autorisation de commande du premier actionneur de frein de stationnement (4) est transmise par échange d'un jeton entre le premier dispositif de commande (2) et le deuxième dispositif de commande (3).

10. Système de freinage selon l'une des revendications précédentes, **caractérisé en ce qu'**un disjoncteur (27, 28) est agencé entre le premier actionneur de frein de stationnement (4) et les dispositifs d'entraînement respectifs pour la commande du premier actionneur de frein de stationnement (4) du premier dispositif de commande (2) et du deuxième dispositif de commande (3).

11. Système de freinage selon la revendication 10, **caractérisé en ce que** seul le disjoncteur (27, 28) dont le dispositif de commande (2, 3) associé possède le jeton est toujours fermé.

12. Système de freinage selon l'une quelconque des revendications précédentes, **caractérisé en ce que** le deuxième dispositif de commande (3) est agencé de façon à mettre en oeuvre ou compléter une fonction de freinage de service de décélération du véhicule automobile (10) en mouvement par les actionneurs de frein de stationnement (4, 5) en cas de panne ou de défaillance du premier dispositif de commande (2) et/ou d'au moins une des unités de frein hydraulique (15, 16, 17, 18).

13. Système de freinage selon l'une des revendications précédentes, comprenant quatre capteurs de vitesse de roue, **caractérisé en ce que** les quatre capteurs de vitesse de roue (22, 23, 24, 25) sont reliés au deuxième dispositif de commande (3) de telle sorte que les signaux des quatre capteurs de vitesse de roue (22, 23, 24, 25) sont aptes à être transmis au deuxième dispositif de commande (3), un multiplexeur (26) étant en outre prévu, étant conçu pour transmettre les signaux de deux capteurs de vitesse de rotation de roue (22, 23, 24, 25) au premier dispositif de commande (2).

14. Système de freinage selon la revendication 13, **caractérisé en ce que** le deuxième dispositif de commande (3) est conçu pour assurer un freinage contrôlé par glissement au moyen des deux actionneurs de frein de stationnement (4, 5) en tenant compte des signaux des quatre capteurs de vitesse de rotation de roue (22, 23, 24, 25).

15. Véhicule automobile présentant un essieu avant et un essieu arrière, **caractérisé en ce qu'**il est prévu un système de freinage (1) selon l'une des revendications 1 à 14.
